# EUROPEAN PATENT SPECIFICATION

(11) **EP 4 209 476 B1**
(45) Date of publication and mention of the grant of the patent: **05.03.2025**
(21) Application number: 21189189.0
(22) Date of filing: 02.08.2021
(51) Int. Cl.: C05B 7/00, C05C 3/00, C05D 9/00, C05F 5/00, C05F 9/04, C05F 11/00, C05G 5/12, C05G 5/40

(54) **AGRONOMIC FERTILIZER PELLET BASED ON POLYVALENT EXTINGUISHING POWDERS**
AGRONOMISCHES DÜNGEPELLET AUF BASIS POLYVALENTER LÖSCHPULVER
GRANULÉ D'ENGRAIS AGRONOMIQUE À BASE DE POUDRES D'EXTINCTION POLYVALENTES

(30) Priority: 31.07.2020 IT 202000018907
(43) Date of publication of application: 12.07.2023
(73) Proprietor: CADI DEI F.LLI MILASI - S.r.l., 89132 Reggio di Calabria (IT)
(72) Inventor: Proto, Andrea Rosario, 89122 REGGIO CALABRIA (IT); Gelsomino, Antonio, 89133 REGGIO CALABRIA (IT); Panuccio, Maria Rosaria, 89122 REGGIO CALABRIA (IT); Sidari, Rossana, 89132 REGGIO CALABRIA (IT); Papandrea, Salvatore Francesco, 89040 San Giovanni di Gerace (IT); Gangemi, Maurizio Rocco, 89127 REGGIO CALABRIA (IT); Santagati, Roberta Italia, 89132 REGGIO CALABRIA (IT); Milasi, Pietro, 89134 REGGIO CALABRIA (IT)
(74) Representative: Perrotta, Aldo

(56) References cited:
- EP-A1- 2 522 410
- WO-A2-2006/056602
- DE-A1- 102004 024 697
- DE-A1- 102005 015 928
- DE-A1- 102005 063 039

## Description

### Technical field of the invention

The present invention relates to the production of agronomic fertilizer pellets based on polyvalent extinguishing powders, known as ABC powders, at the end of their cycle of use, combined with some organic matrices to allow their use in the agronomic field.

### State of art

The extinguishing powders, in fact, are mainly made up of a mixture of phosphate salts and ammonium sulphate and represent matrices of notable applicative interest in the field of agriculture since they are made up of soluble phosphate salts, enriched in compounds of nitrogen and sulphur, and therefore usable as a mineral phosphate fertilizer.

However, the current non-applicability in the agronomic field is due to their powdery state which prevents their distribution, storage and consequently their use in the commercial field.

The patent application n WO2006056602 (A2) to overcome these disadvantages describes a pellet based on extinguishing powders in which the pellet is obtained with the addition of pomace or molasses with a drying agent in particular based on dried vegetables and, in particular , fruit pulp, for example grape pulp.

Also patent applications DE 10 2005 063039 A1, DE 10 2005 015928 A1, EP 2 522 410 A1, DE 10 2004 024697 Al disclose compostion of agronomic fertilizer utilizing extinguishing powders.

However, the pellet described in WO2006056602 (A2) has a series of drawbacks, it has poor durability and has a high absorbency which compromises the durability of the pellet which, by absorbing humidity, tends to fall apart.

### General description of the invention:

For this reason, the invention proposes a mixture with which it is possible to aggregate the exhausted powder with composted soil improvers and other organic matrices to make it in a format, the pellet, which allows its agronomic use and conservation for a medium-long period which allows deferred use over time, with high durability and a low moisture absorbing power which guarantees the maintenance of the pellets over time, allowing storage, transport and a slow release of the fertilizing elements for agronomic use.

Thanks to the production of pellets composed of extinguishing powder and organic matrices, used as aggregating agents, it will be possible to reuse the mineral phosphate component of the powders in the agricultural field.

In fact, the monoammonium phosphate (NH⁴ H² PO⁴) present in the ABC-E class extinguishing powders is the most widely used solid phosphate fertilizer in the agricultural field and is widely used as it releases a large quantity of nitrogen and phosphorus which are essential for nutrition of some plants.

Specifically, the invention is based on the identification of a correct mixing of components which are capable of aggregating as a result of a mechanical process (pelletizing) and are able to ensure durability performance without the pellet crumbling during the operations of packaging, storage, transport and distribution.

In addition, this invention allows the use of composted soil conditioners among the various organic matrices. In fact, it is known that loose compost shows various criticalities that can be easily overcome only by transforming it into pellets.

In fact, the bulk compound presents difficulties on the logistics chain due to the poor perception of the qualitative characterization, the difficulty in distribution in the open field, a lower economic value for sale and a difficulty in storage within the same manufacturing companies.

The rationalization of the use of by-products of agro-forestry activity represents from an environmental point of view a sustainable practice for the recovery of energy, but often the difficulties of transport, handling, distribution and storage do not allow a correct agronomic practice as they require means and spaces dedicated to these activities.

Through a mechanical process and with the correct formulation between the matrices, it is possible to obtain a product that can be easily bagged, convenient to store and easy to distribute in the field with the possibility of marketing it.

Furthermore, the finished product, in addition to providing the agricultural soil with organic matrices necessary for the maintenance of the humic balance and soil functionality, releases the main nutrients (N, P and S) in assimilable form available for the mineral nutrition of the plant gradually , i.e. decreasing losses due to leaching and volatilization.

In order to obtain the suitable formulation, various organic matrices were used mixed with the exhausted extinguishing powder:
Woodchipped lignocellulosic residues of agro-forestry origin (chipped), used at a variable concentration from 20 to 40% by weight;
Composted matrices (compost) used at a concentration ranging from 20 to 40% by weight;
Solid residues from the extraction of oil from oilseeds;
Corn starch (starch);
Solid residues of coffee grounds (coffee).

From a purely agronomic point of view each mixture can already be considered suitable for its use in the field but in any case some behaviors based on the tests conducted can give useful indications for use.

In fact, the experimentation conducted in the laboratory and in the field has made it possible to detect aspects of considerable importance; in particular, significant results have been observed which have made it possible to differentiate the single mixtures of pellets from a qualitative point of view; thus being able to evaluate and classify which are the most suitable mixtures to be used in the agricultural field.

A number of mixtures were tested:
- Mixture 1: 50-60% of Compost + 25-30% of Jatropha + 5-10% of class ABC-E extinguishing powders + 5-10% of Starch;
- Mixture 2: 60-65% of Compost + 25-30% of Jatropha + 7-12% of class ABC-E extinguishing powders;
- Mixture 3: 35-40% of Compost + 20-25% of Jatropha + 5-10% of Class ABC-E extinguishing powders + 10-15% Starch + 10-15% of Wood Chips;
- Blend 4: 45-35% of Compost + 15-20% solid residues of exhausted coffee grounds + 15-20% of Jatropha + 10-5% of class ABC-E extinguishing powders + 5-10% starch + 10 -5% Wood Chips.
- Mixture 5: 60-65% of Compost + 25-30% of Wood Chips + 8-10% of Class ABC-E extinguishing powders;
- Mixture 6: 70-75% of compost + 15-20% of wood chips + 8-10% of class ABC-E extinguishing powders.

The tests identified the most suitable formulation (Compost + Solid residues of exhausted coffee grounds + Jatropha seed pressing residue + ABC-E class extinguishing powders + Starch + Wood chips) to be used for the pelletizing phase as all the types of pellets that have not passed the tests of durability, dimensional stability and further tests of product quality, were excluded.

In the light of all the pelletization tests carried out, the possibility of creating a mixture of pellets that is the best in the agronomic field clearly emerges as its response to the mechanical and physical tests confirmed its suitability. In particular, blend 4 (45-35% of Compost + 15-20% solid residues of exhausted coffee grounds + 15-20% of Jatropha + 10-5% of class ABC-E extinguishing powders + 5-10% Starch + 10-5% wood chips) was the best from an agronomic point of view for several reasons.

In the case of tests in water, it was the one that showed a slow flaking speed, this is due to the low content of wood chips (about 10%); this aspect is very important, because showing a slow rate of flaking leads to a slow and constant release of nutritive elements into the soil.

In terms of weight variations, this mixture, with the same % content of compost and extinguishing powder, has generated a weight increase of about 105% compared to all the other mixtures produced.

Another fundamental parameter that this blend emerges from compared to the others is in the durability tests.

A high impact resistance considerably reduces the formation of airborne dust and therefore the waste of product during distribution; moreover, a greater shelf life and administration is guaranteed not only in the open field but also in small doses for domestic and hobby uses.

Mixture 4 showed greater durability during mechanical processes and greater resistance to flaking. This is due to the physical properties performed by the different matrices that compose it. In fact, the use of starch alone (Mixture 1) did not show high properties since the binding power of the starch itself during the mechanical pelletizing process did not guarantee its suitable resistance to shocks (durability) and flaking in water . Mixture 2, on the other hand, showed flaking problems right from the pelletizing process, highlighting low production yields and the excessive presence of compost in percentage terms negatively affected its durability. Mixtures 3, 5 and 6, on the other hand, while presenting excellent results in terms of production yield and durability, did not pass the water flaking tests as the quantity of wood chips was such as to compromise the dimensional stability, facilitating the disintegration of the pellets product. For these reasons, blend 4 has instead shown excellent results in both types of tests because the percentage content of wood chips is minimal and serves to give a skeleton to the pellet without however compromising its disintegration, the exhausted coffee acts as a neutral element which does not interact with the external environment (high humidity deteriorates the pellet), has a low absorbency and is therefore considered an "inert" matrix which, thanks to its powdery nature, allows filling the empty "micro spaces" that are generated during the compression of the mixture during pelletizing thus avoiding water absorption. The presence of Jatropha oily residue, in a lower % than the other mixtures, allows to give both a rigid structure to the pellet and to create an insulating layer with respect to external agents (water, decomposition processes of organic matrices, etc.). Finally, the minimal presence of starch made it possible to "bind" the different matrices.

## Claims

1. Agronomic fertilizer pellet based on multipurpose extinguishing powders comprising an organic matrix **characterized in that** it has the following formulation:
45-35% of Compost + 15-20% solid residues of exhausted coffee grounds + 15-20% of Jatropha + 10-5% of class ABC-E extinguishing powders + 5-10% Starch + 5-10% of Wood chips.

## Patentansprüche

1. Agronomisches Düngpellet auf Basis von polyvalenter Löschpulvern mit einer organischen Matrix, **dadurch gekennzeichnet, dass** es die folgende Zusammensetzung aufweist:
45-35 % Kompost + 15-20 % feste Rückstände von verbrauchtem Kaffeesatz + 15-20 % Jatropha + 10-5 % Löschpulver der Klasse ABC-E + 5-10 % Stärke + 5-10 % Holzspäne.

## Revendications

1. Granulé d'engrais agronomique à base de poudres d'extinction polyvalentes comprenant une matrice organique **caractérisé en ce qu'**il présente la formulation suivante :
45-35% de Compost + 15-20% de résidus solides de marc de café épuisé + 15-20% de Jatropha + 10-5% de poudres d'extinction de classe ABC-E + 5-10% Amidon + 5-10% de Copeaux de bois.
